# EUROPEAN PATENT APPLICATION

(11) **EP 4 672 268 A1**
(43) Date of publication of application: **31.12.2025**
(21) Application number: 24185378.7
(22) Date of filing: 28.06.2024
(51) Int. Cl.: H01B 3/20, H01B 3/44, C08L 23/10, H01B 3/28, H01B 9/02

(54) **A POWER CABLE**

(71) Applicant: NKT HV Cables AB, 371 60 Lyckeby (SE)
(72) Inventor: POURRAHIMI, Amir Masoud, Västerås (SE); DINKELMEYER, Christof, Lauf (DE)
(74) Representative: Kransell & Wennborg KB

(57) **Abstract**

A power cable (1) comprising: a conductor (2) extending along a centre axis (C); an insulation system (5) including at least a first semiconducting layer (3) provided around the conductor (2), and an insulation layer (4) provided around the first semiconducting layer (3); wherein the insulation layer (4) comprises: a) 60 to 90 wt% polypropylene; b) 5 to 20 wt% styrene block copolymer; c) 1 to 6 wt% dielectric fluid; and d) o to 15 wt% polyethylene.

## Description

### TECHNICAL FIELD

The present disclosure generally relates to power cables.

### BACKGROUND

A typical power cable for medium and high voltage applications comprises a conductor surrounded by at least an inner semiconductive layer, an insulation layer and optionally an outer semiconductive layer, in that order. The power cables are typically produced by extruding the layers onto the conductor.

The polymer material in one or more of the layers of the power cable may be thermosetting, typically crosslinked, to improve e.g. heat and deformation resistance, creep properties, mechanical strength, chemical resistance and abrasion resistance. However, crosslinking the polymer material is associated with several drawbacks, e.g. the need for degassing volatile compounds during the production of the power cable and difficulties in recycling the power cable.

Thermoplastic polymer material offers several advantages compared to a thermosetting polymer material, such as omitted degassing step and increased recyclability. However, the absence of a crosslinked material can lead to impaired material properties of the power cable.

Moreover, some thermoplastic polymer material may exhibit proper, or even improved, material properties in a first range of temperatures as compared to a crosslinked material, but deteriorated material properties in a second range of temperatures.

Thus, there is a need for power cables comprising polyolefin compositions which avoid the disadvantages associated with crosslinked material, but which also offer attractive material properties.

### SUMMARY

A general object of the present disclosure is to provide a power cable that solves or at least mitigates the problems of the prior art.

According to a first aspect, there is hence provided a power cable comprising: a conductor extending along a centre axis; an insulation system including at least a first semiconducting layer provided around the conductor, and an insulation layer provided around the first semiconducting layer; wherein the insulation layer comprises: a) 60 to 90 wt% polypropylene; b) 5 to 20 wt% styrene block copolymer; c) 1 to 6 wt% dielectric fluid; d) 0 to 15 wt% polyethylene; wherein the weight percentages are based on the insulation layer as a whole.

Hereby, an advantageous insulation layer is provided. Thus, an improved power cable is provided. Owing to the composition of the insulation layer, and in particular the polymer combination of polypropylene and styrene block copolymer and its relative amount in the insulation layer compared to the dielectric fluid, an insulation layer with well-balanced material properties is provided. For example, the insulation layer according to the first aspect may exhibit a combination of an advantageously low storage modules at low temperatures (typically at 30 °C) and an advantageously high storage modulus at high temperatures (typically 120 °C). Thus, a well-balanced combination of flexibility at lower temperatures and creep resistance at higher temperature is provided. If also including polyethylene in the insulation layer, e.g. up to 15 wt%, or up to 13 wt%, based on the insulation layer as a whole, the above mentioned well-balanced material properties may be further improved. Additionally or alternatively, the insulation layer may exhibit well-balanced material properties by a combination of advantageously low DC conductivity at low temperatures (typically at 20 °C) and an advantageously low DC conductivity at high temperatures (typically at 90 °C).

Storage modulus is a measure of the stored energy in a material during deformation, representing the elastic, or recoverable, portion of the material's response in dynamic mechanical analysis, DMA. It reflects the material's ability to store energy and return to its original shape after deformation. The storage modulus is a dynamic property specific to viscoelastic materials, e.g. the insulation layer of the present disclosure, and is measured under dynamic, oscillatory, conditions, wherein it is dependent on the frequency of the applied load. The storage modulus indicates how much energy is stored in the material and is recoverable during each deformation cycle.

According to one embodiment, the insulation layer comprises: a) 65 to 82 wt% polypropylene; b) 10 to 15 wt% styrene block copolymer; c) 2 to 5 wt% dielectric fluid; d) 0 to 10 wt% polyethylene, wherein the weight percentages are based on the insulation layer as a whole. Hereby, the above mentioned well-balanced material properties related to the storage modulus and/or the DC conductivity may be further improved.

According to one embodiment, the amount of polyethylene in the insulation layer is between 0 and 13 wt%, or between 5 and 15 wt%, such as between 7 and 13 wt%. In particular, including polyethylene in the insulation layer between 0 and 13 wt%, or 5 and 15 wt%, such as between 7 and 13 wt%, based on the insulation layer as a whole, the above mentioned well-balanced material properties related to the storage modulus at low and high temperatures may be further improved.

According to one embodiment, the polypropylene is a propylene copolymer, preferably a propylene random copolymer and/or is a homophasic polypropylene or is a heterophasic polypropylene or isotactic polypropylene. For example, the polypropylene is a random heterophasic polypropylene copolymer. Preferably, the polypropylene is not a homopolymer.

According to one embodiment, the styrene block copolymer is selected from the group consisting of SEBS, SEPS, SBS and SIS or mixtures thereof. For example, SEBS being Styrene-Ethylene-Butylene-Styrene, may be poly[styrene-b- (ethylene-co-butylene)-b-styrene], SEPS being Styrene-Ethylene-Propylene-Styrene, may be poly[styrene-b-(ethylene-co-propylene)-b-styrene], SBS being Styrene-Butadiene-Styrene, may be poly[styrene-b-(butadiene)-b-styrene] and SIS being Styrene-Isoprene-Styrene, may be poly[styrene-b-(isoprene)-b-styrene]. For example, the styrene block copolymer may be a mixture of at least any two of SEBS, SEPS, SBS and SIS.

The styrene block copolymer may have a styrene content of 10 to 40 wt%, such as between 13 and 35 wt%. Thus, the styrene content of the styrene block copolymer may be equal to or below 40 wt%, such as of equal to or below 35 wt%, and may be equal to or above 10 wt%, such as equal or to above 13 wt%. Such styrene content is beneficial for provision of a high creep resistance.

The styrene block copolymer may have a density of between 900 kg/m³ and 1200 kg/m³, preferably between 950 kg/m³ and 1150 kg/m³. Density is measured according to ISO 1183-1:2019.

The styrene block copolymer may have a specific gravity of between 0.80-1.20 g/cm³, preferably between 0.85-1.10 g/cm³. Specific gravity is measured according to ASTM D2240.

The styrene block copolymer may have a melt flow index of 1-25 g/10 min tested at 230°C and 2.16 kg. Melt flow index is measured according to ASTM D1238.

The styrene block copolymer may be prepared by any suitable known method in the art or can be obtained commercially.

According to one embodiment, the polyethylene is selected from the group consisting of: LDPE, LLDPE, UHMWPE. Thus, the LDPE may be low density polyethylene, linear low density polyethylene or ultra high molecular weight polyethylene.

For example, if the polyethylene is LDPE, the LDPE is a low density polyethylene, typically a homopolymer of ethylene (LDPE homopolymer). For example, if the polyethylene is LLDPE, the LLDPE is a linear low density copolymer of ethylene with one or more comonomer(s). The one or more comonomers of the LLDPE are preferably selected from polar comonomer(s), non-polar comonomer(s) or from a mixture of the polar comonomer(s) and non-polar comonomer(s). Moreover, said LDPE or LLDPE may optionally be unsaturated. The LDPE may e.g. have a density between 915 and 940 kg/m³, or between 917 and 930 kg/m³.

For example, if the polyethylene is UHMWPE, the molecular weight Mw is preferably between 1 500 000 or 2 000 000 - 8 000 000 g/mol, such as between 3000000 g/mol and 6000000 g/mol.

Alternatively, the polyethylene is selected from the group consisting of: LDPE, LLDPE, UHMWPE, HDPE. It is reasonable to assume that HDPE is related to an effect corresponding to something between LDPE and UHMWPE, at least based on its melting point and stiffness.

For example, if the polyethylene is HDPE, the density is typically between 930 and 970 kg/m³.

According to one particularly preferred embodiment the insulation layer comprises: a) 60 to 90 wt% polypropylene; b) 5 to 20 wt% styrene block copolymer; c) 1 to 6 wt% dielectric fluid; d) 0 to 15 wt% LDPE or UWMWPE; wherein the weight percentages are based on the insulation layer as a whole. In such embodiment, the well-balanced material properties related to the storage modulus at low and high temperatures are particularly beneficial.

According to one embodiment, the insulation layer has a DC conductivity of between 100 and 300 fS/m when measured after 24 hours thermal cycling between 20 - 90 °C at 30 kV/mm and a temperature of 90 °C, such as between 100 and 250 fS/m, using the DC conductivity method as defined herein. The DC conductivity method is described later. Thus, the insulation layer may exhibit an advantageously low DC conductivity at high temperatures (at 90 °C). For example, the insulation layer has a DC conductivity of between 150 and 250 fS/m, or between 170 and 210 fS/m, when measured after 24 hours thermal cycling between 20 - 90 °C at 30 kV/mm and a temperature of 90 °C.

According to one embodiment, the insulation layer has a DC conductivity of between 0.1 and 10 fS/m, or of between 0.2 and 5 fS/m when measured after 24 hours thermal cycling between 20 - 90 °C at 30 kV/mm and a temperature of 20 °C, such as between 0.2 and 3 fS/m, using the DC conductivity method as defined herein. Thus, the insulation layer may exhibit an advantageously low DC conductivity at low temperatures (at 20 °C). For example, the insulation layer has a DC conductivity of between 0.2 and 1.8 or 2 fS/m when measured after 24 hours thermal cycling between 20 - 90 °C at 30 kV/mm and a temperature of 20 °C.

Typically, the insulation layer has a DC conductivity of between 100 and 300 fS/m when measured after 24 hours thermal cycling between 20 - 90 °C at 30 kV/mm and a temperature of 90 °C, such as between 100 and 250 fS/m, or between 150 and 250 fS/m, or between 170 and 210 fS/m, and a DC conductivity of between 0.1 and 10 fS/m, or of between 0.2 and 5 fS/m when measured after 24 hours thermal cycling between 20 - 90 °C at 30 kV/mm and a temperature of 20 °C, such as between 0.2 and 3 fS/m, or between 0.2 and 1.8 fS/m, using the DC conductivity method as defined herein. Thus, the insulation layer may exhibit well-balanced material properties with regards to the DC conductivity at high and low temperature, i.e. a combination of advantageously low DC conductivity at low temperatures (at 20 °C) and an advantageously low DC conductivity at high temperatures (at 90 °C).

According to one embodiment, the insulation layer has a storage modulus of between 400 and 600 MPa, or of between 450 and 550 MPa when measured at 30 °C, such as between 460 and 540 MPa, such as between 480 and 520 MPa, using the DMA storage modulus method as defined herein. The DMA storage modulus method is described later. Thus, the insulation layer may exhibit an advantageously low storage modules ("flexibility") at low temperatures (at 30 °C). For example, the insulation layer has a storage modulus of between 460 and 500 MPa when measured at 30 °C.

According to one embodiment, the insulation layer has a storage modulus of between 20 and 100 MPa or of between 50 and 100 MPa when measured at 120 °C, such as between 35 and 85 MPa or of between 40 and 75 MPa or between 55 and 95 MPa, such as between 55 and 80 MPa, using the DMA storage modulus method as defined herein. Thus, the insulation layer may exhibit an advantageously high storage modulus at high temperatures (at 120 °C). For example, the insulation layer may have a storage modulus of between 25 and 75 MPa or of between 55 and 75 MPa when measured at 120 °C. Typically, high storage modulus result in high creep-resistant.

Typically, the insulation layer has a storage modulus of between 400 and 600 MPa, or of between 450 and 550 MPa when measured at 30 °C, such as between 460 and 540 MPa, such as between 480 and 520 MPa, and a storage modulus of between 20 and 100 MPa or of between 50 and 100 MPa when measured at 120 °C, such as between 35 and 85 MPa or of between 40 and 75 MPa or between 55 and 95 MPa, such as between 55 and 80 MPa, using the DMA storage modulus method as defined herein. Thus, the insulation layer may exhibit a combination of an advantageously low storage modules at low temperatures (at 30 °C) and an advantageously high storage modulus at high temperatures (at 120 °C). Thus, a well-balanced combination of desirable storage modules at low and high temperatures is provided.

According to one embodiment, the insulation layer has a melting enthalpy of at least 50 J/g. For example, the insulation layer has a melting enthalpy of at least 60 J/g, or at least 70 J/g.

According to one embodiment, the insulation layer is an extruded insulation layer, e.g. a co-extruded insulation layer. For example, the insulation layer may have been extruded onto the first semiconducting layer. Alternatively, the insulation layer may have been co-extruded together with the first semiconducting layer.

According to one embodiment, the extruded insulation layer has been produced by compounding and subsequent extrusion. Thus, the insulation layer may have been obtained from a composition comprising a) 60 to 90 wt% polypropylene, b) 5 to 20 wt% styrene block copolymer, c) 1 to 6 wt% dielectric fluid and d) 0 to 15 wt% polyethylene, or from a composition comprising a) 65 to 82 wt% polypropylene, b) 10 to 15 wt% styrene block copolymer, c) 2 to 5 wt% dielectric fluid and d) 0 to 10 wt% polyethylene, the weight percentages being based on the composition as a whole. The amount of polyethylene in the composition may be between 5 and 15 wt%, such as between 7 and 13 wt%.

According to one embodiment, the insulation layer, or the composition used for obtaining the insulation layer, comprises at most 3 wt% of one or more additives, such as antioxidant(s), stabilizer(s), processing aid(s), inorganic filler(s), the weight percentage being based on the insulation as a whole, or based on the composition as a whole.

According to one embodiment, the polypropylene, the styrene block copolymer, the dielectric fluid and optionally the polyethylene constitutes at least 90 wt% of the insulation layer, such as at least 95 wt% of the insulation layer, such as at least 97 wt% of the insulation layer, based on the weight of the insulation layer.

According to one embodiment, the insulation layer, or the composition used for obtaining the insulation layer, consists of polypropylene, styrene block copolymer, dielectric fluid and optionally polyethylene and/or one or more additives, typically in amounts specified above.

According to one embodiment, the polypropylene and the styrene block copolymer have been premixed prior to compounding.

According to one embodiment, the insulation layer does not comprise a peroxide and/or is not crosslinked. According to one embodiment, the insulation layer is thermoplastic, i.e. is formed of a thermoplastic composition. For example, the insulation layer does not comprise peroxide, or crosslinking residues. It should be noted that any layer of the power cable, such as e.g. the inner semiconductive layer, may additionally be thermoplastic. The first semiconducting layer typically comprises an electrically conductive compound, such as e.g. carbon black. According to one embodiment, the whole insulation system is thermoplastic, and does not comprise peroxide or crosslinking residues and/or is not crosslinked.

According to one embodiment, the insulation system is not crosslinked. Hereby, not only the insulation layer, but also the whole insulation layer is not crosslinked and may benefit from associated advantages (e.g. no degassing during the production of the insulation layer or insulation system, increased recyclability etcetera).

According to one embodiment, the power cable is a medium voltage or high voltage power cable, preferably a medium voltage or high voltage power cable.

According to one embodiment, the power cable further comprises a second semiconducting layer. For example, the first semiconducting layer may be an inner semiconducting layer arranged in direct contact with, and radially inside of, the insulation layer, and the second semiconducting layer may be an outer semiconducting layer arranged radially outside of the insulation layer.

According to one embodiment, the second semiconducting layer is comprised in the insulation system. The second semiconducting layer may be arranged in direct contact with, and radially outside of, the insulation layer. The second semiconducting layer may form an insulation screen. The first semiconducting layer may form a semiconducting conductor shield. The first semiconducting layer may be arranged closest to the conductor (i.e. closest with regards to the insulation system).

According to a second aspect of the present disclosure, there is provided a process for producing a power cable comprising the steps of: providing a conductor; applying an insulation system surrounding the conductor, wherein the insulation system includes at least a first semiconducting layer and an insulation layer surrounding the first semiconducting layer; wherein the insulation layer comprises: a) 60 to 90 wt% polypropylene; b) 5 to 20 wt% styrene block copolymer; c) 1 to 6 wt% dielectric fluid; d) 0 to 15 wt% polyethylene; wherein the weight percentages are based on the insulation layer as a whole.

According to one embodiment, the insulation system is applied by extrusion, such as co-extrusion. For example, the insulation layer may be extruded onto the first semiconducting layer. Alternatively, the insulation layer may be co-extruded together with the first semiconducting layer.

According to one embodiment, the extruded insulation layer has been produced by compounding and subsequent extrusion. Thus, the insulation layer may have been obtained from a composition comprising: a) 60 to 90 wt% polypropylene; b) 5 to 20 wt% styrene block copolymer; c) 1 to 6 wt% dielectric fluid; d) 0 to 15 wt% polyethylene; wherein the weight percentages are based on the insulation layer as a whole.

According to one embodiment, the polypropylene and the styrene block copolymer have been premixed prior to the compounding. It is advantageous to premix the polypropylene and styrene block copolymer to obtain a good mixture. The dielectric fluid and optionally the polyethylene can subsequently be added and mixed into the polypropylene-styrene block copolymer mixture.

The examples and embodiments discussed above in connection to the first aspect applies mutatis mutandis to the second aspect.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a radial cross section of a power cable of an example embodiment;
Fig. 2 schematically shows a side view of at least a part of the power cable of Fig. 1;
Fig. 3 is a flow-chart showing the steps of a process for producing a power cable according to at least some example embodiments;
Fig. 4 is a graph showing the Dynamic Mechanical Analysis (DMA) storage modulus (E') for various comparative and inventive example samples;
Fig. 5 is a graph showing the DMA storage modulus for various comparative and inventive example samples; and
Fig. 6 is a graph showing the DMA storage modulus for various comparative and inventive example samples;

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

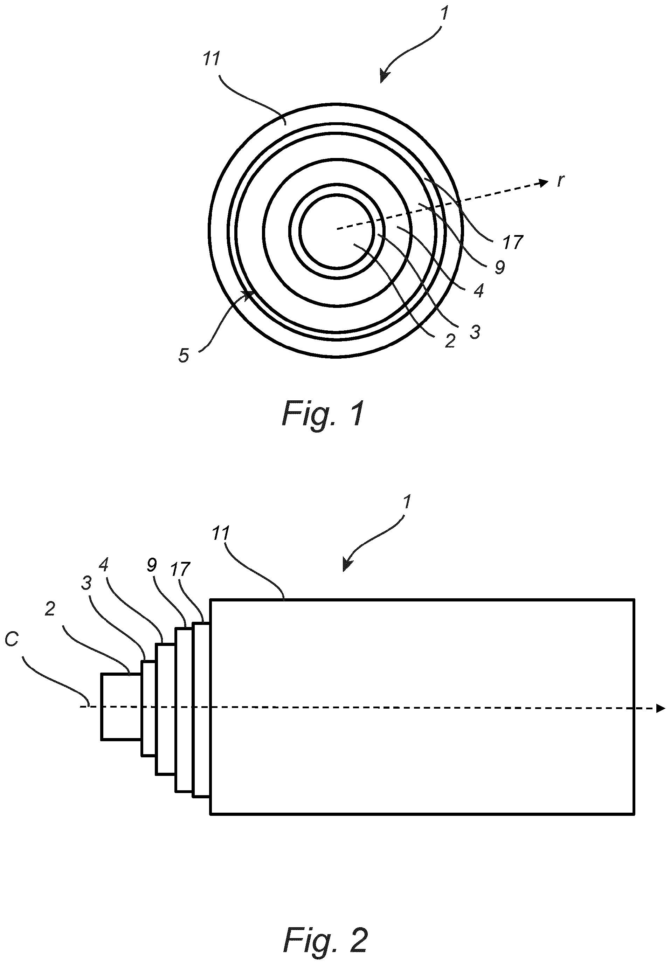

Figs. 1 and 2 show an example of a power cable 1. The power cable 1 is in this example a single power core power cable. However, it should be mentioned that the power cable could comprise several identical power cores to form a multi-core power cable, such as three-phase power cable. The power cable 1 may be a HVDC power cable or a HVAC power cable, for example for voltages higher than 35 kV, or higher than 110 kV, or higher than 450 kV, or higher than 550 kV, or higher than 800 kV. The power cable 1 may alternative be a medium power cable (DC or AC), for example for voltages between 5 kV and 35 kV. However, according to one alternative embodiment, the power cable 1 is a medium power cable (or high voltage cable in the medium voltage span) for voltages between 1 kV and 35 kV.

In Fig. 1, a radial cross section of an embodiment of a power cable 1 is shown. The radial cross section is a cross section in the radial direction r of the power cable 1, i.e. a plane perpendicular to a centre axis of the power cable 1 (extending into the paper). The power cable 1 may e.g. be defined by cylindrical coordinates (by a radial distance r, azimuth φ which is the angle along the circumferential direction, and an axial coordinated along the longitudinal axis).

In Fig. 2, a side view of the power cable 1 of Fig. 1, in which the power cable 1 extends along the centre axis C (or centre longitudinal axis).

In the following, the power cable 1 will be described with reference to both Figs. 1 and 2. The power cable 1 comprises a conductor 2 extending along the centre axis C. The conductor 2 may for example be stranded, segmental of Milliken type, solid, or a profile wire conductor. The conductor 2 may for example comprise copper or aluminum.

The power cable 1 further comprises an insulation system 5 provided around, and covering, the conductor 2.

The insulation system 5 comprises a first semiconducting layer 3 provided around the conductor 2, an insulation layer 4 provided around the first semiconducting layer 3, and optionally, a second semiconducting layer 9 provided around the insulation layer 4. Thus, the first semiconducting layer 3 surrounds the conductor 2, the insulation layer 4 surrounds the first semiconducting layer 3, and the optional second semiconducting layer 9 surrounds the insulation layer 4.

In the embodiment of Figs. 1 and 2, the insulation layer 4 is arranged to be in direct contact with, and radially outside of the first semiconducting layer 3. Moreover, the optional second semiconducting layer 9 is arranged to be in direct contact with, and radially outside of, the insulation layer 4. Thus, the first semiconducting layer 3 may form a semiconducting conductor shield and be referred to as an inner semiconducting layer. The optional second semiconducting layer 9 may form an insulation screen and be referred to as an outer semiconducting layer.

In the embodiment of Figs. 1 and 2, the power cable 1 further comprises a water barrier structure 17 surrounding the insulation system 5. Thus, in the embodiment of Fig. 1, the water barrier structure 17 is in direct contact with the insulation system 5. In the example, the water barrier structure 17 is arranged in direct contact with, and radially outside of, the optional second semiconducting layer 9. The water barrier structure 17 is typically arranged to prevent, or at least greatly reduce, water penetrating into the insulation system 5 from the outside. The water barrier structure may e.g. exhibit a water permeability of below 0.1 g / (m²*24 h) or below 0.05 g / (m²*24 h). The water barrier structure may e.g. be a tape wrapped around the insulation system 5, and/or may comprise a metallic foil.

The power cable 1 may furthermore comprise a polymeric jacket 11 provided around the insulation system 5. In the embodiment of Figs. 1 and 2, the polymeric jacket is arranged in direct contact with, and radially outside of, the water barrier structure 17. Thus, the water barrier structure 17 is arranged in between the insulation system 5 and the polymeric jacket 11. However it should be noted that the polymeric jacket 11 may be arranged in direct contact with, and radially outside of, the insulation system 5, in case the water barrier structure 17 is omitted.

The polymeric jacket 11 may e.g. comprise a polymeric material that is extruded around the water barrier structure 17 and/or the insulation system 5. The polymeric jacket 11 of the embodiment of Figs. 1 and may be wholly or partly water impermeable.

The insulation system 5 may be extruded and comprise thermosetting and/or thermoplastic polymer material. For example, the layers 3, 4, 9 of the insulation system 5 may be different in the aspect of being made of thermosetting and thermoplastic polymer material. However, at least the insulation layer 4 is made of thermoplastic polymer material and is hence not crosslinked. Thus, the insulation layer 4 typically does not comprise peroxide or other crosslinking agents. Typically, the insulations system 5 is not crosslinked. The first semiconducting layer 3, and the optional second semiconducting layer 9, typically comprises an electrically conductive compound, e.g. carbon black.

The insulation layer 4 comprises a) polypropylene, b) styrene block copolymer, c) dielectric fluid and optionally d) polyethylene. The insulation layer may further comprise e) one or more additives. The one or more additives may include antioxidant(s), stabilizer(s), processing aid(s) and inorganic filler(s). According to one embodiment, the insulation layer 4 consists of a) polypropylene, b) styrene block copolymer, c) dielectric fluid and optionally d) polyethylene and optionally e) one or more additives.

For example, the insulation layer 4 comprises a) 60 to 90 wt% polypropylene, b) 5 to 20 wt% styrene block copolymer, c) 1 to 6 wt% dielectric fluid, d) 0 to 15 wt% polyethylene, optionally together with 0 to 3 wt% one or more additives. The weight percentages are based on the insulation layer 4 as a whole. For example, the insulation layer 4 comprises a) 65 to 82 wt% polypropylene, b) 10 to 15 wt% styrene block copolymer, c) 2 to 5 wt% dielectric fluid, d) 0 to 10 wt% polyethylene, optionally together with 0 to 3 wt% of one or more additives. In particular, in both of the above examples, the amount of d) polyethylene may be between 5 and 15 wt%, preferably between 7 and 13 wt%. For example, the polypropylene, the styrene block copolymer, the dielectric fluid and optionally the polyethylene constitutes at least 90 wt% of the insulation layer 4, such as at least 95 wt% of the insulation layer 4, such as at least 97 wt% of the insulation layer 4, based on the weight of the insulation layer as a whole.

The polypropylene in the examples above is typically a propylene copolymer, preferably a propylene random copolymer and/or is a homophasic polypropylene or is a heterophasic polypropylene or isotactic polypropylene. Additionally or alternatively, the styrene block copolymer is selected from the group consisting of SEBS, SEPS, SBS and SIS. Additionally or alternatively, the polyethylene is selected from the group consisting of: LDPE, LLDPE, UHMWPE. UHMWPE may have a Mw of 1 500 000 and 8 000 000 g/mol.

According to one embodiment, the polypropylene is a propylene copolymer, the styrene block copolymer is SEBS and the polyethylene is selected from the group consisting of: LDPE, LLDPE, UHMWPE.

As will be shown in the examples later, but which is briefly mentioned here, the insulation layer 4 has advantageous material properties, such as a well-balanced combination of flexibility at lower temperatures and creep resistance at higher temperatures and/or well-balanced material properties with regards to the DC conductivity at high and low temperature. For example, the insulation layer exhibit a storage modulus of between 400 and 600 MPa, or of between 450 and 550 MPa when measured at 30 °C, such as between 460 and 540 MPa, such as between 480 and 520 MPa, or between 460 and 500 MPa, and a storage modulus of between 20 and 100 MPa or of between 50 and 100 MPa when measured at 120 °C, such as between 35 and 85 MPa or of between 40 and 75 MPa or between 55 and 95 MPa, such as between 55 and 80 MPa, or between 25 and 75 MPa or of between 55 and 75 MPa, using the DMA storage modulus method as defined herein. Additionally or alternatively, the insulation layer 4 has a DC conductivity of between 100 and 300 fS/m when measured after 24 hours thermal cycling between 20 - 90 °C at 30 kV/mm and a temperature of 90 °C, such as between 100 and 250 fS/m, or between 150 and 250 fS/m, or between 170 and 210 fS/m, and a DC conductivity of between 0.1 and 10 fS/m, or of between 0.2 and 5 fS/m when measured after 24 hours thermal cycling between 20 - 90 °C at 30 kV/mm and a temperature of 20 °C, such as between 0.2 and 3 fS/m, or between 0.2 and 1.8 fS/m, using the DC conductivity method as defined herein.

The insulation layer 4 is, as previously mentioned, preferably an extruded insulation layer, i.e. has been produced by extrusion, such as co-extrusion. Preferably, the extruded insulation layer has been produced by compounding, preferably by premixing the polypropylene and the styrene block copolymer prior to the compounding.

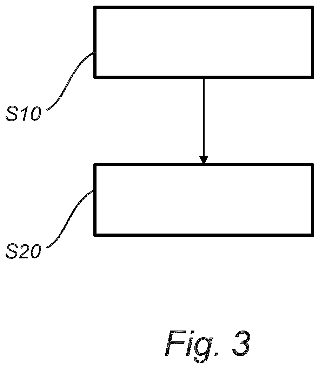

Fig. 3 is a flow-chart describing a process for producing a power cable according to at least some examples. The power cable is for example that of Figs. 1 and 2. Thus, in the following, reference is made to the power cable 1.

In a first step S10, a conductor 2 is provided. The conductor 2 may for example be stranded, segmental of Milliken type, solid, or a profile wire conductor, and/or comprise copper or aluminum.

In a second step S20, being subsequent to the first step S10, an insulation system 5 is applied to surround the conductor 2. The insulation system includes at least a first semiconducting layer 3 and an insulation layer 4 surrounding the first semiconducting layer 3. The insulation system 5 may e.g. be applied to surround the conductor 2 by extrusion, or co-extrusion. For example, at least two of the layers of the insulation system 5 is co-extruded onto the conductor 2.

As previously mentioned, the insulation layer comprises: a) 60 to 90 wt% polypropylene; b) 5 to 20 wt% styrene block copolymer; c) 1 to 6 wt% dielectric fluid; and d) 0 to 15 wt% polyethylene, wherein the weight percentages are based on the insulation layer as a whole.

### Examples

In the following, various samples were prepared and analyzed by specific material parameters. Each sample corresponds to the previously described insulation layer.

### Example 1

A poly-compound (PC) formulation comprising 84.7 wt% polypropylene (PP) copolymer (RP210G from LyondellBasell), 15 wt% styrene block copolymer (SBC) (TC6GPN from Kraiburg) and 0.3 wt% antioxidant (0.2 wt% Irganox 1035 and 0.1 wt% Irganox 802, both from BASF) was mixed with dielectric fluid oil (DBT), (dibenzyltoluene from ARKEMA) and various amounts of polyethylene, here being exemplified as LDPE (LDPE LD 101BA from ExxonMobil). A sample containing only PC and a sample containing PC and DBT were also prepared.

PC and LDPE pellets were premixed with DBT oil, and then were compounded with Eurolab 16 twin screw extruder (TSE) into granules. The premixed granules were fed from hopper into TSE, the hopper zone was set to 200 °C. The temperatures for other zones and die were set to 200 - 220 °C. The screw speed was set to 20 - 40 rpm. The extrudates were hot pressed into 1 mm thick samples with highest temperature of 220 °C and pressure of 200 bar.

The various samples of example 1 are summarized in Table 1.

**Table 1. Compositions of the various samples**

| | CE1 | IE1 | IE2 | CE2 | CE3 | CE4 |
|---|---|---|---|---|---|---|
| | PC | DBT:PC | DBT:LDPE (10):PC | DBT:LDPE (30):PC | DBT:LDPE (47.5):PC | DBT:LDPE (65):PC |
| PC wt% | 100 | 95 | 85 | 65 | 47.5 | 30 |
| DBT wt% | | 5 | 5 | 5 | 5 | 5 |
| LDPE wt% | | | 10 | 30 | 47.5 | 65 |

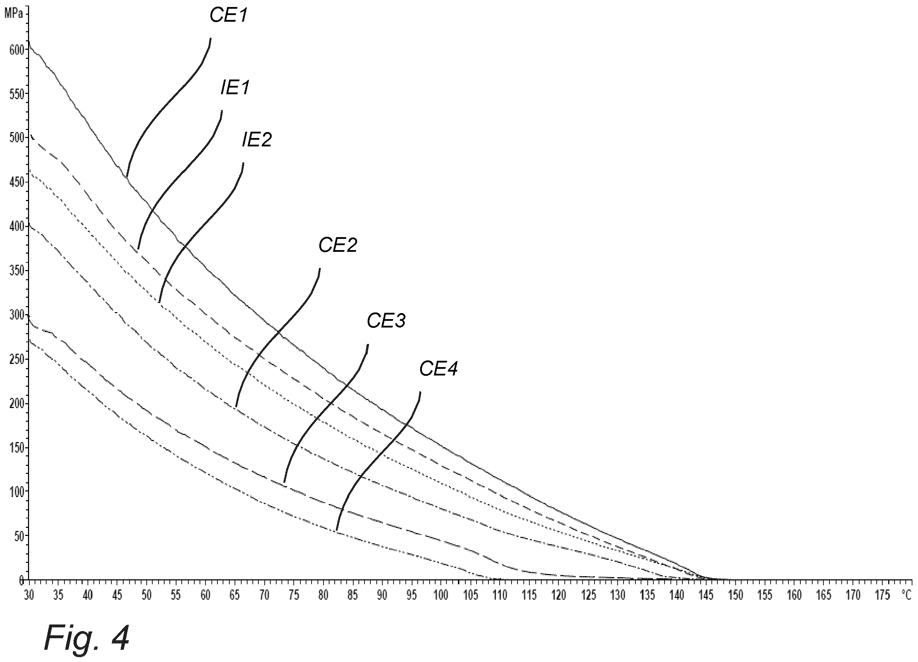

With reference to Fig. 4, the DMA storage modulus for the samples of Table 1 are shown. As shown in Fig. 4, both inventive example 1 (IE1) with DBT:PC and inventive example 2 (IE2) with DBT:LDPE(10):PC exhibit improved storage modulus at low temperatures (about 30 °C) as compared to comparative example 1 (CE1) with only PC (i.e. the pure PC sample). Moreover, at high temperatures (about 120 °C), both IE1 and IE2 exhibit improved storage modulus compared with comparative example 2 (CE2) with DBT:LDPE(30):PC, comparative example 3 (CE3) with DBT:LDPE(47.5):PC and comparative example 4 (CE4) with DBT:LDPE(65):PC. Notably, the storage modulus of CE2, CE3 and CE4 at about 120 °C are significantly lower than the storage modulus of IE1 and IE2.

With increased LDPE content, the storage modulus at low temperature is further improved compared to IE1 and IE2. However, at the same time, the storage modulus at high temperatures is greatly reduced. Thus, the samples of IE1 and IE2 exhibit a combination of an advantageously low storage modules at low temperatures (typically at 30 °C) and an advantageously high storage modulus at high temperatures (typically 120 °C), resulting in a well-balanced combination of flexibility at lower temperature and creep resistance at higher temperatures is provided.

### Example 2

Corresponding samples as in example 1 were prepared but for polyethylene being LLDPE (LLDPE from Sigma Aldrich, MFI 1 g/10min (190 °C, 2.16 kg)) instead of LDPE. However, due to processing limitations, a sample with a correspondingly high amount of polyethylene (i.e. 65 wt%) was not prepared.

The various samples of example 2 are summarized in Table 2 (CE1 and IE1 being the same as in Table 1).

**Table 2. Compositions of the various samples**

| | CE1 | IE1 | IE3 | IE4 | CE5 | CE6 |
|---|---|---|---|---|---|---|
| | PC | DBT:PC | DBT:LLDPE (5):PC | DBT:LLDPE (10):PC | DBT:LLDPE (30):PC | DBT:LLDPE (47.5):PC |
| PC wt% | 100 | 95 | 90 | 85 | 65 | 47.5 |
| DBT wt% | | 5 | 5 | 5 | 5 | 5 |
| LLDPE wt% | | | 5 | 10 | 30 | 47.5 |

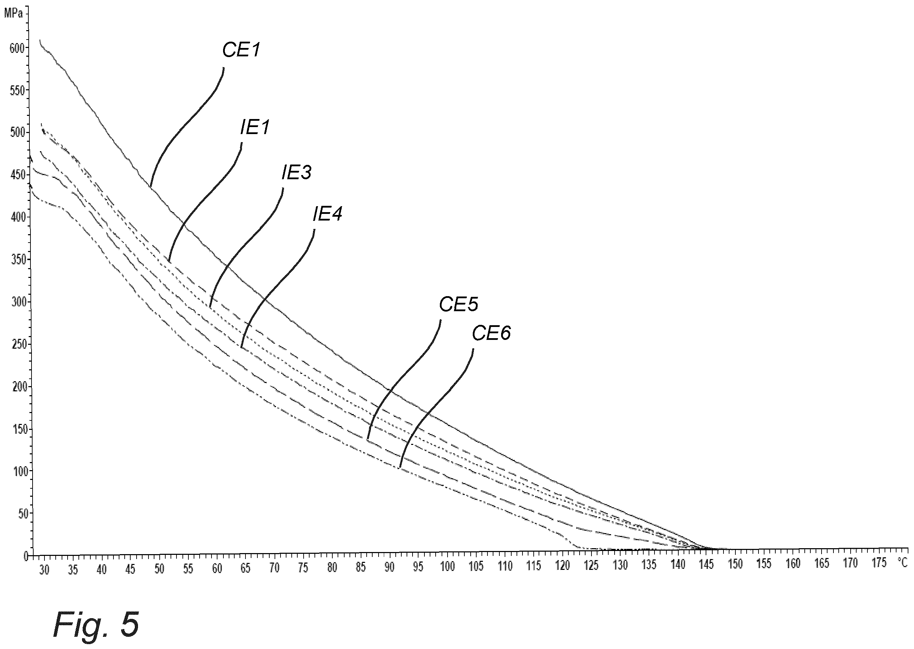

With reference to Fig. 5, the DMA storage modulus for the samples of Table 2 are shown. As shown in Fig. 5, inventive example 3 (IE3) with DBT:LLDPE(5):PC and inventive example 4 (IE4) with DBT:LLDPE(10):PC exhibit improved storage modulus at low temperatures (at or below 30 °C) as compared to CE1. Moreover, at high temperatures (at or above 120 °C), IE3 and IE4 exhibit improved storage modulus as compared to comparative example 5 (CE5) with DBT:LLDPE(30):PC (CE6) and comparative example 6 (CE6) with DBT:LLDPE(47.5):PC.

Correspondingly to the results of Fig. 4, with increased LLDPE content, the storage modulus at low temperature is further improved compared to IE3 and IE4. However, at the same time, the storage modulus at high temperatures is greatly reduced. Thus, the sample of IE3 and IE4 exhibit a combination of an advantageous flexibility at low temperatures (typically at 30 °C) and an advantageous creep resistance at high temperatures (typically 120 °C), resulting in a well-balanced combination of storage modules at low and high temperatures.

### Example 3

Corresponding samples as in example 1 were prepared but for polyethylene being UHMWPE (429015 from Sigma-Aldrich) instead of LDPE. However, due to processing limitations, samples with a higher amount of polyethylene than 10 wt% were not prepared.

The various samples of example 3 are summarized in Table 3 (CE1 and IE1 being the same as in Table 1, and hence not included here again).

**Table 3. Compositions of the various samples**

| | CE1 | IE1 | IE5 | IE6 |
|---|---|---|---|---|
| | PC | DBT:PC | DBT:UHMWPE (5):PC | DBT:UHMWPE (10):PC |
| PC wt% | 100 | 95 | 90 | 85 |
| DBT wt% | | 5 | 5 | 5 |
| UHMWPE wt% | | | 5 | 10 |

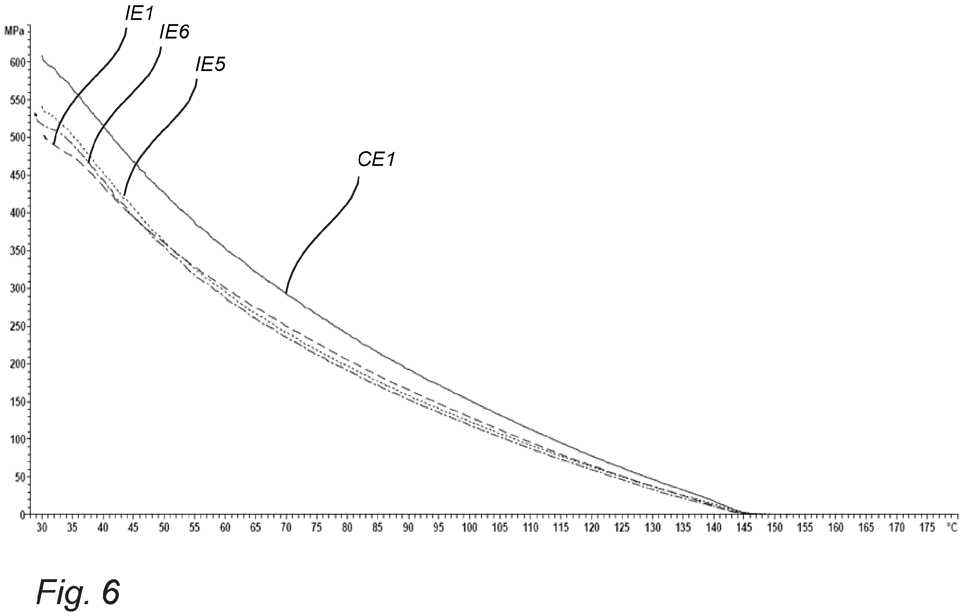

With reference to Fig. 6, the DMA storage modulus for the samples of Table 3 are shown. As shown in Fig. 6, the inventive example 5 (IE5) with DBT:UHMWPE (5):PC and inventive example 6 (IE6) with DBT:UHMWPE (10):PC exhibit improved storage modulus at low temperatures (at or below 30 °C) as compared to CE1. Moreover, at high temperatures (at or above 120 °C), IE5 and IE6 exhibit storage modulus almost compared to the CE1, resulting in a well-balanced combination of storage modules at low and high temperatures.

### Example 4

Various measured material parameters, including the storage modulus at low temperatures and at high temperatures, for the various samples of example 1 are summarized in Table 4.

**Table 4. Compositions of the various samples**

| Properties | CE1 | IE1 | IE2 | CE2 | CE3 | CE4 |
|---|---|---|---|---|---|---|
| Storage modulus | 610 | 500 | 460 | 400 | 290 | 265 |
| (at 30 °C; Mpa) | | | | | | |
| Storage modulus (at 120 °C; MPa) | 80 | 65 | 55 | 40 | 5 | 0.2 |
| Melting enthalpy, ΔH_{f} (J/g) @ 10 °C | 75 | 72 | 83 | 92 | 100 | 108 |
| DC conductivity (fS/m) @ 20 °C | 0.04 | 0.2 | 1.8 | 6.5 | 2.5 | 2.0 |
| DC conductivity (fS/m) @ 90 °C | 120 | 170 | 210 | 420 | 210 | 65 |

As shown in Table 4, IE1 and IE2 exhibit a combination of an advantageously low storage modules at low temperatures (at 30 °C) and an advantageously high storage modulus at high temperatures (at 120 °C), resulting in a well-balanced combination of flexibility at low temperatures and creep resistance at high temperatures, as compared to CE1, CE2, CE3, and CE4.

As also shown in Table 4, IE1 and IE2 exhibit a combination of an advantageously low DC conductivity at low temperatures (typically at 20 °C), e.g. lower as compared to CE2, and an advantageously low DC conductivity at high temperatures (typically at 90 °C), e.g. lower as compared to CE2, resulting in well-balanced material properties with regards to DC conductivity. Both IE1 and IE2 has a DC conductivity of between 170 and 210 fS/m when measured after 24 hours thermal cycling between 20 - 90 °C at 30 kV/mm and a temperature of 90 °C, using the DC conductivity method as defined herein. Moreover, IE1 and IE2 has a DC conductivity of between 0.2 and 1.8 fS/m when measured after 24 hours thermal cycling between 20 - 90 °C at 30 kV/mm and a temperature of 20 °C.

### Methodology

The above DC conductivity measurements were performed according to the method as described in the following.

Each hot-pressed sample was placed in a three-electrode system. The measurement was under an applied electric field of 30 kV/mm, and at least three temperature cycles between 20 and 90 °C. The temperature profile was programmed with aid of an oil bath circulator. One temperature cycling included ramping from 20 to 90 °C with the rate of 0.6 °C/min followed by 2 h isotherm stage at 90 °C, followed by cooling from 90 to 20 °C with the rate of 0.6 °C/min, and finally followed by 2 h isotherm stage at 20 °C. A guard electrode was used to divert any leakage current through the surface to the ground. The measuring electrode diameter was 100 mm. The leakage current was recorded by an electrometer. The apparent DC conductivity was calculated based on the leakage current at the end of isotherms at 20 and 90°C in the third cycle.

The above DMA storage modulus were performed according to the method as described in the following.

Storage modulus was measured using Dynamic Mechanical Analysis (DMA). The samples were hot-pressed (180 °C, 200 bar) to a thickness of 1 mm and the samples were then cut to pieces with length and width dimensions of 10×8 mm. DMA was carried out using a DMA1 from METTLER TOLEDO in tensile mode . A temperature sweep was conducted using a frequency of 1 Hz and oscillation displacement of 10 µm with a temperature ramp of 30 °C to 180 °C (1 °C/min).

The storage modulus at 30 and 120 °C were used as stiffness indicators. A lower storage modulus, i.e. stiffness, at low temperature (about 30 °C) is an indicator of higher flexibility. A higher storage modulus, i.e. stiffness, at high temperature (about 120 °C), is an indicator of a higher creep-resistant behaviour and/or high temperature integrity.

The DMA storage modulus may alternative be performed by ISO 6721-1 or ASTM D4065.

The above melting enthalpy measurements were performed according to the DSC measurement described in the following.

DSC measurements were carried out under a nitrogen atmosphere (50 ml/min) using DSC5+ (from METTLER TOLEDO). The temperature program was:
Ramp from 25 to -80 °C, 10 °C/min
Isotherm at -80°C, 2 min
Ramp from -80 to 200 °C, 10 °C/min (known as "1st heating")
Isotherm at 200°C, 2 min
Ramp from 200 to -80 °C, 10 °C/min (known "cooling")
Isotherm at -80°C, 2 min
Ramp from -80 to 200 °C, 10 °C/min (known as "2nd heating"
Isotherm at 200°C, 2 min

The melting enthalpy was measured in the 2nd heating within the temperature range of 10 - 160 °C.

Any standard or qualifications mentioned in the present application are to be based on instructions valid on the date of priority of the present application.

The inventive concept has mainly been described above with reference to a few examples. However, as is readily appreciated by a person skilled in the art, other embodiments than the ones disclosed above are equally possible within the scope of the inventive concept, as defined by the appended claims. For example, in case the power cable comprises several identical power cores to form a multi-core power cable, such as three-phase power cable, each power core may correspond to that described with reference to the power cable described in Figs. 1 and 2. Thus, each power core may at least comprise a conductor 3, an insulation system 5 as previously described. The power cores may be stranded and surrounded by a polymeric jacket.

## Claims

1. A power cable (1) comprising:
- a conductor (2) extending along a centre axis (C);
- an insulation system (5) including at least a first semiconducting layer (3) provided around the conductor (2), and an insulation layer (4) provided around the first semiconducting layer (3);
wherein the insulation layer (4) comprises:
a) 60 to 90 wt% polypropylene;
b) 5 to 20 wt% styrene block copolymer;
c) 1 to 6 wt% dielectric fluid;
d) 0 to 15 wt% polyethylene;
wherein the weight percentages are based on the insulation layer (4) as a whole.

2. The power cable (1) according to claim 1, wherein the insulation layer (4) comprises:
a) 65 to 82 wt% polypropylene;
b) 10 to 15 wt% styrene block copolymer;
c) 2 to 5 wt% dielectric fluid;
d) 0 to 10 wt% polyethylene,
wherein the weight percentages are based on the insulation layer (4) as a whole.

3. The power cable (1) according to any one of claims 1-2, wherein the amount of polyethylene in the insulation layer (4) is between 5 and 15 wt%, such as between 7 and 13 wt%.

4. The power cable (1) according to any one of claims 1-3, wherein the polypropylene is a propylene copolymer, preferably a propylene random copolymer and/or is a homophasic polypropylene or is a heterophasic polypropylene or isotactic polypropylene.

5. The power cable (1) according to any one of claims 1-4, wherein the styrene block copolymer is selected from the group consisting of SEBS, SEPS, SBS and SIS or mixtures thereof.

6. The power cable (1) according to any one of claims 1-5, wherein the polyethylene is selected from the group consisting of: LDPE, LLDPE, UHMWPE.

7. The power cable (1) according to any one of claims 1-6, wherein the insulation layer (4) has a DC conductivity of between 100 and 300 fS/m when measured after 24 hours thermal cycling between 20 - 90 °C at 30 kV/mm and a temperature of 90 °C, such as between 100 and 250 fS/m, using the DC conductivity method as defined herein.

8. The power cable (1) according to any one of claims 1-7, wherein the insulation layer (4) has a DC conductivity of between 0.1 and 10 fS/m, or of between 0.2 and 5 fS/m when measured after 24 hours thermal cycling between 20 - 90 °C at 30 kV/mm and a temperature of 20 °C, such as between 0.2 and 3 fS/m, using the DC conductivity method as defined herein.

9. The power cable (1) according to any one of claims 1-8, wherein the insulation layer (4) has a storage modulus of between 400 and 600 MPa, or of between 450 and 550 MPa when measured at 30 °C, such as between 460 and 540 MPa, such as between 480 and 520 MPa, using the DMA storage modulus method as defined herein.

10. The power cable (1) according to any one of claims 1-9, wherein the insulation layer (4) has a storage modulus of between 50 and 100 MPa when measured at 120 °C, such as between 55 and 95 MPa, such as between 55 and 80 MPa, using the DMA storage modulus method as defined herein.

11. The power cable (1) according to any one of claims 1-10, wherein the insulation layer (4) is an extruded insulation layer.

12. The power cable (1) according to claim 11, wherein the extruded insulation layer (4) has been produced by compounding and subsequent extrusion.

13. The power cable (1) according to any one of claims 1-12, wherein the insulation layer (4) does not comprise a peroxide or is not crosslinked.

14. The cable (1) according to any one of claims 1-13 being a medium voltage or high voltage power cable.

15. A process for producing a power cable (1) comprising the steps of:
- providing a more conductors (2);
- applying an insulation system (5) surrounding the conductor (2), wherein the insulation system includes at least a first semiconducting layer (3) and an insulation layer (4) surrounding the first semiconducting layer (3);
wherein the insulation layer (4) comprises:
a) 60 to 90 wt% polypropylene;
b) 5 to 20 wt% styrene block copolymer;
c) 1 to 6 wt% dielectric fluid;
d) 0 to 15 wt% polyethylene;
wherein the weight percentages are based on the insulation layer (4) as a whole.
